# EUROPÄISCHE PATENTSCHRIFT

(11) **EP 0 509 243 B1**
(45) Veröffentlichungstag und Bekanntmachung des Hinweises auf die Patenterteilung: **30.10.1996**
(21) Anmeldenummer: 92104371.7
(22) Anmeldetag: 13.03.1992
(51) Int. Cl.: B01D 53/34

(54) **Verfahren und Vorrichtung zur Erhöhung der Abscheideleistung von Rauchgas-Entschwefelungs-Anlagen**
Process and device for increasing the separating performance of flue gas desulfurization installations
Procédé et dispositif d'augmentation du rendement de séparation d'installations de désulfuration de gaz d'échappement

(30) Priorität: 19.04.1991 DE 4112750
(43) Veröffentlichungstag der Anmeldung: 21.10.1992
(73) Patentinhaber: BDAG Balcke-Dürr Aktiengesellschaft, D-40882 Ratingen (DE)
(72) Erfinder: Ruscheweyh, H., Prof.Dr.-Ing., W-5100 Aachen (DE)
(74) Vertreter: Stenger, Watzke & Ring Patentanwälte

(56) Entgegenhaltungen:
- EP-A- 0 273 508
- US-A- 3 702 048
- US-A- 3 966 438
- US-A- 4 419 331
- PATENT ABSTRACTS OF JAPAN vol. 7, no. 289 (C-202)(1434) 23. Dezember 1983

## Beschreibung

Die Erfindung betrifft ein Verfahren und eine Vorrichtung zur Erhöhung der Abscheideleistung von Rauchgas-Entschwefelungs-Anlagen mit mindestens einem Reaktor, dem das Rauchgas über mindestens einen Rauchgaskanal im unteren Bereich etwa waagerecht zugeführt und der nach einer Umlenkung des Rauchgases in die senkrechte Richtung vom Rauchgas von unten nach oben durchströmt wird.

Rauchgas-Entschwefelungs-Anlagen der voranstehend beschriebenen Art sind bekannt. Sie entsprechen der aus der EP-A-0 273 508 bekannten Anlage zur Reinigung von Abgasen bei der Glasherstellung Das Rauchgas strömt hierbei über einen etwa waagerecht verlaufenden Rauchgaskanal von der Seite her in den unteren Bereich des Reaktors. Es wird anschließend in die senkrechte Richtung umgelenkt, so daß es den Reaktor von unten nach oben durchströmt. Hierbei wird die Innenkante des Reaktoreinlaufes scharfkantig umströmt, so daß sich die Strömung an dieser Stelle des Reaktors ablöst. Außerdem ist der Strömungsweg des im oberen Teil des Rauchgaskanales strömenden Rauchgases bis zur ersten Waschebene des Reaktors verhältnismäßig kurz, wogegen der Weg des im unteren Teil des Rauchgaskanals strömenden Teils des Rauchgases, der in den hinteren Bereich des Reaktorraumes gelangt, erheblich größer ist, so daß sich für das Rauchgas insgesamt sehr unterschiedliche Strömungswege für den Übergang aus dem Rauchgaskanal in die erste Waschebene des Reaktors ergeben.

Außer der bereits erwähnten nachteiligen Ablösung der Strömung im Bereich der Innenkante des Reaktoreinlaufes ergibt sich bei den bekannten Anlagen der Nachteil, daß die in den hinteren Teil des Reaktors einströmenden Rauchgasteile eine erheblich längere Kontaktzeit mit der herabfallenden Kalkemulsion haben als die im Bereich der vorderen Innenkante einströmenden Rauchgase. Messungen haben gezeigt, daß durch die längere Kontaktzeit der in den hinteren Teil des Reaktors einströmenden Rauchgase bereits bis zu 80 % des Schwefelgehaltes absorbiert werden, wogegen der Abscheidegrad der in den vorderen Teil des Reaktors einströmende Rauchgase sehr gering ist, da die an der Innenkante einströmenden Rauchgase bis zum Erreichen der ersten Waschebene des Reaktors nur eine relativ kurze Kontaktzeit mit der herabfallenden Kalkemulsion haben.

Auf diese Art und Weise entsteht eine stark unsymmetrische Verteilung des Abscheidegrades, die auch auf dem weiteren Weg durch die Waschzonen wegen des fehlenden Queraustausches der Strömung nicht ausgeglichen wird.

Um den vom Gesetzgeber geforderten Gesamtabscheidegrad zu erreichen, muß dementsprechend viel Kalkemulsion zugeführt werden. Außerdem ist es erforderlich, entsprechend viele Waschebenen zu installieren. Insgesamt führt dies zu einem großen Bauvolumen des Reaktors und erfordert darüber hinaus hohe Energiekosten für den Betrieb, da die Kalkemulsion mit hohem Druck zugeführt werden muß und die große Bauhöhe des Reaktors große Druckhöhen für die Pumpen erfordert.

Der Erfindung liegt die **Aufgabe** zugrunde, ein Verfahren und eine Vorrichtung zur Erhöhung der Abscheideleistung von Rauchgas-Entschwefelungs-Anlagen der eingangs beschriebenen Art zu schaffen.

Die **Lösung** dieser Aufgabenstellung durch das erfindungsgemäße Verfahren ist dadurch gekennzeichnet, daß durch mindestens eine im Endbereich des Rauchgaskanals mit ihrer Haupterstreckung unter einem spritzen Winkel zur Strömungsrichtung des Rauchgases angeordnete, mindestens ein Vorderkantenwirbelsystem erzeugende Wirbeleinbaufläche die waagerechte zweidimensionale Strömung des Rauchgases im Rauchgaskanal durch Ausbildung eines die Strömungsfäden der Strömung im Rauchgaskanal zopfartig miteinander verflechtenden stationären Wirbelnachlaufes vor dem Eintritt in die Waschzone des Reaktors in eine stark dreidimensionale, in die senkrechte Richtung umgelenkte Strömung umgewandelt wird.

Durch die erfindungsgemäße Umwandlung der zweidimensionalen Strömung im etwa waagerecht verlaufenden Rauchgaskanal in eine stark dreidimensionale, d.h. die einzelnen Strömungsfäden miteinander vermischende Strömung, die gleichzeitig in die senkrechte Richtung umgelenkt wird, ergibt sich für alle Strömungsfäden eine etwa gleich lange Kontaktzeit mit der aus dem Reaktor herabfallenden Kalkemulsion, so daß das Rauchgas insgesamt mit etwa gleich großer Vorabscheidung des Schwefeldioxids in die erste Waschzone des Reaktors eintritt. Die Strömungs- und Richtungsumwandlung erfolgt gemäß der Erfindung auf besonders verlustarme Weise durch eine an sich bekannte Wirbeleinbaufläche, die mindestens ein Vorderkantenwirbelsystem erzeugt, das die einzelnen Strömungsfäden der zweidimensionalen Strömung im Rauchgaskanal zopfartig miteinander verflicht und gleichzeitig aus der waagerechten in die senkrechte Richtung umlenkt, wodurch außerdem Strömungsablösungen an der Innenkante vermieden werden, die von der oberen, waagerechten Rauchgaskanalwand und der vorderen, senkrechten Reaktorwand gebildet wird. Da die Wirbeleinbaufläche einen stationären, d.h. seine Lage nicht oder nur unwesentlich verändernden Wirbelnachlauf erzeugt und nur eine vernachlässigbar kleine Verringerung des Strömungsquerschnitts zur Folge hat, erfolgt die Strömungsumwandlung und -umlenkung besonders verlustarm; sie ist darüber hinaus gegenüber Änderungen des Rauchgasvolumens unempfindlich.

Insgesamt ergibt sich mit dem erfindungsgemäßen Verfahren eine besonders gute Vergleichmäßigung der Kontaktzeit für das dem Reaktor aus dem Rauchgaskanal zugeführte Rauchgas, so daß eine über den gesamten Strömungsquerschnitt des Reaktors gleichmäßige und hohe Abscheideleistung erzielt wird. Dies ermöglicht eine Reduzierung der Baugröße des Reaktors und eine Verringerung der Menge der zuzuführenden Kalkemulsion, womit nicht unbeträchtliche Anlage- und Betriebskosten eingespart werden können.

Gemäß einem weiteren Merkmal der Erfindung wird die dreidimensionale Strömung In der Waschzone des Reaktors aufrechterhalten, so daß auch hier die Bildung von Rauchgassträhnen mit unterschiedlicher Abscheideleistung vermieden wird.

Aus der US-A-4 419 331 war zwar eine Rauchgas-Entschwefelungs-Anlage mit einem liegenden, waagerecht durchströmten Reaktor bekannt, in dessen Zuleitungskanal feststehende Einbauten in der Art von Propellerflügeln angeordnet sind. Diese dienen jedoch nicht der Erzeugung von Vorderkantenwirbeln, sondern bewirken eine Rotation der gesamten Strömung im Kanal, die mit dem erfindungsgemäßen Verfahren grundsätzlich nicht vergleichbar ist.

Die erfindungsgemäße Vorrichtung zur Erhöhung der Abscheideleistung von Rauchgas-Entschwefelungs-Anlagen mit mindestens einem Reaktor, dem das Rauchgas über mindestens einen Rauchgaskanal im unteren Bereich etwa waagerecht zugeführt wird und der nach einer Umlenkung des Rauchgases in die senkrechte Richtung vorn Rauchgas von unten nach oben durchströmt wird, ist dadurch gekennzeichnet, daß im Endbereich des Rauchgaskanals mindestens eine Wirbeleinbaufläche mit ihrer Haupterstreckung unter einem spritzen Winkel zur Strömungsrichtung des Rauchgases angeordnet ist. Diese Wirbeleinbaufläche kann erfindungsgemäß einstellbar und ggf. durch einen Stellantrieb verstellbar sein, um auch sich stark verändernden Betriebsverhältnissen angepaßt werden zu können, die sich beispielsweise durch Änderungen des dem Reaktor zugeführten Rauchgasvolumens, der Rauchgastemperatur und des Gehalts an Schwefeldioxid ergeben.

Auf der Zeichnung ist schematisch ein Ausführungsbeispiel eines Teils einer Rauchgas-Entschwefelungs-Anlage mit der erfindungsgemäßen Vorrichtung dargestellt, und zwar zeigen:
- Fig. 1: eine Seitenansicht des Endes eines Rauchkanals und des unteren Teils eines Reaktors einer im übrigen nicht dargestellten Rauchgas-Entschwefelungs-Anlage,
- Fig. 2: eine Draufsicht auf die Anlagenteile gemäß Fig. 1,
- Fig. 3: eine der Fig. 1 entsprechende Seitenansicht, in die der Verlauf zweier Paare von Strömungsfäden eingezeichnet ist, deren Wirbelbildung von der unteren Hälfte der Wirbeleinbaufläche erzeugt wird,
- Fig. 4: eine der Fig. 3 entsprechende Seitenansicht mit Strömungsfäden, deren Wirbelbildung vom oberen Teil der Wirbeleinbaufläche erzeugt wird,
- Fig. 5: eine in Strömungsrichtung des Rauchgases gesehene waagerechte Ansicht entlang des Rauchgaskanals mit einer Darstellung der Strömungsfäden gemäß Fig. 3 und
- Fig. 6: eine der Fig. 5 entsprechende Ansicht mit einer Darstellung der Strömungsfäden gemäß Fig. 4.

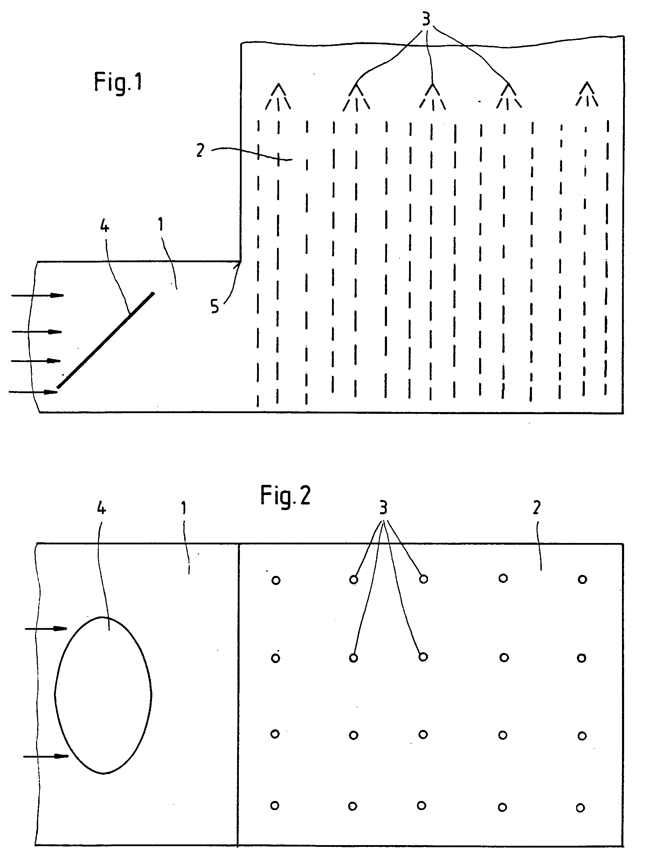

Die in den Fig. 1 und 2 dargestellten Teile einer Rauchgas-Entschwefelungs-Anlage umfassen das Ende eines Rauchgaskanales 1, der etwa waagerecht verläuft und im unteren Teil eines Reaktorgehäuses 2 mündet. Dieses mit rechteckigem Grundriß ausgebildete Reaktorgehäuse 2 erstreckt sich über eine größere Länge senkrecht nach oben und enthält ggf. mehrere Waschzonen, in denen jeweils eine Mehrzahl von verteilt angeordneten Sprühdüsen 3 angeordnet ist. Mit Hilfe dieser Sprühdüsen 3 wird - wie schematisch in Fig. 1 angedeutet - Kalkemulsion gleichmäßig über den gesamten Querschnitt des Reaktorgehäuses 2 verteilt, wobei diese Kalkemulsion auf den Boden des Reaktorgehäuses 2 herabfällt.

Im Endbereich des Rauchgaskanals 1 ist eine Wirbeleinbaufläche 4 unter einem spitzen Winkel zur Strömungsrichtung des Rauchgases fest angeordnet. Beim dargestellten Ausführungsbeispiel hat diese Wirbeleinbaufläche 4 die Gestalt einer ovalen, ebenen Platte. Die Wirbeleinbaufläche 4 kann aber auch durch eine kreisförmige, deltaförmige oder rombische Platte gebildet werden; derartige Platten müssen nicht zwangsläufig eben sein, sie können gebogen, abgewinkelt oder mit abgewinkelten Kanten ausgeführt werden.

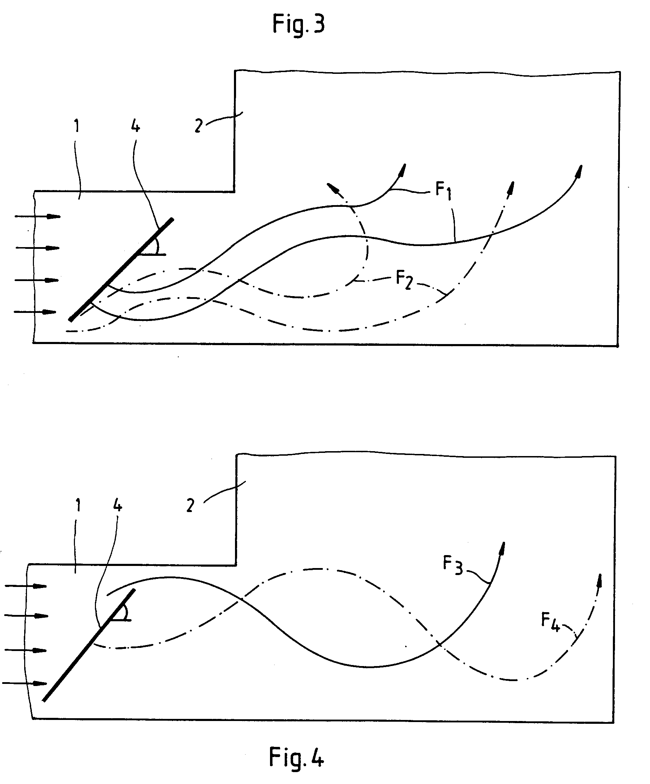

Entscheidend ist, daß die Wirbeleinbaufläche 4 mit ihrer Haupterstreckung unter einem spitzen Winkel zur Strömungsrichtung der Rauchgase in Endbereich des Rauchgaskanals 1 angeordnet ist. Die strömenden Rauchgase sind in den Fig. 1 und 2 durch Pfeile angedeutet. Bei einer derartigen Anordnung der Wirbeleinbaufläche 4 im Endbereich des Rauchgaskanals 1 erzeugen die Ränder der Wirbeleinbaufläche 4 ein Vorderkantenwirbelsystem, das die waagerechte zweidimensionale Strömung des Rauchgases im Rauchgaskanal 1 in eine stark dreidimensionale und zusätzlich in die senkrechte Richtung umgelenkte Strömung umwandelt, wie dies insbesondere aus den Fig. 3 und 4 hervorgeht. Diese Strömungsumwandlung und Strömungsumlenkung wird durch einen stationären Wirbelnachlauf erzeugt, der anhand einiger Strömungsfäden in den Fig. 3 bis 6 dargestellt ist.

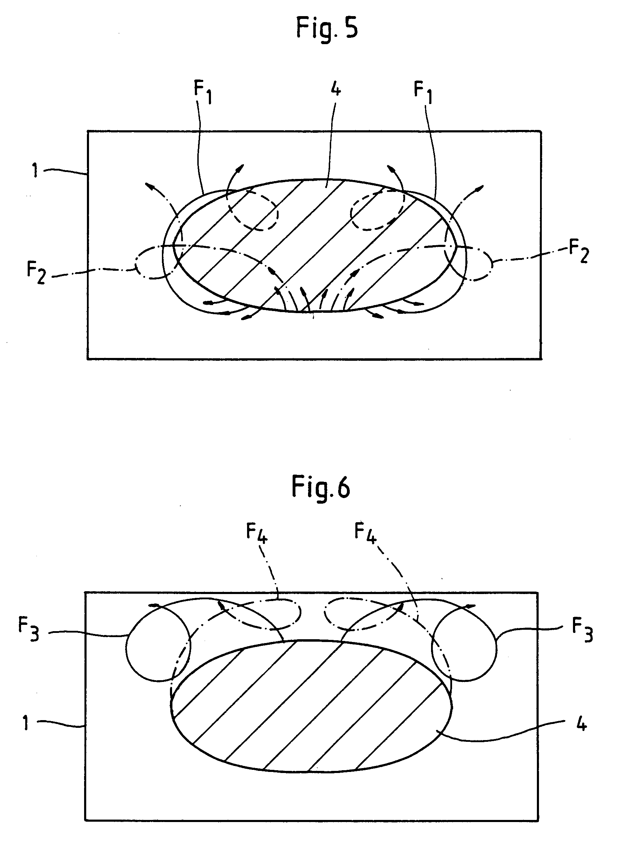

In den zusammengehörenden Fig. 3 und 5 sind zwei Paare von Strömungsfäden F1 und F2 gezeichnet, die jeweils von der unteren Hälfte der Wirbeleinbaufläche 4 erzeugt werden, wie insbesondere aus Fig. 5 hervorgeht. Die Fig. 4 und 6 zeigen dagegen Strömungsfäden F3 und F4, die von der oberen Hälfte der Wirbeleinbaufläche 4 erzeugt werden. Diese unterschiedlichen Strömungsfäden F1 bis F4 sind bewußt auf jeweils zwei Darstellungen verteilt worden, um ihren Verlauf zu verdeutlichen. Insgesamt zeigen die Fig. 3 bis 6, daß die durch die parallel zueinander verlaufenden Pfeile im Rauchgaskanal 1 symbolisierte zweidimensionale Strömung im Rauchgaskanal 1 durch das von der Wirbeleinbaufläche 4 erzeugte Vorderkantenwirbelsystem mit stationärem Wirbelnachlauf in eine dreidimensionale, d.h. turbulente Strömung umgewandelt wird, die gleichzeitig aus der waagerechten in die senkrechte Richtung umgelenkt wird. Hierbei findet eine zopfartige Verflechtung der einzelnen Strömungsfäden F1 - F4 statt, wie sowohl die Fig. 3 und 4 als auch die Fig. 5 und 6 zeigen.

Der Einbau der Wirbeleinbaufläche 4 im Endbereich des Rauchgaskanals 1 führt somit zu einer verlustarmen Umlenkung der Strömung aus dem Rauchgaskanal 1 in das Reaktorgehäuse 2 und gleichzeitig zu einer intensiven Vermischung der einzelnen Strömungsfäden, die auf der Zeichnung durch die hervorgehobenen Strömungsfäden F1 - F4 symbolisiert sind.

Alle Teile des im Rauchgaskanal 1 strömenden Rauchgases erhalten auf diese Weise etwa die gleiche Verweilzeit im unteren Teil des Reaktorgehäuses 2, weil ihre Strömungswege in diesem Teil des Reaktorgehäuses 2 etwa gleich lang sind. Die durch die herabfallende Kalkemulsion erfolgende Vorabscheidung des Schwefeldioxids im unteren Teil des Reaktorgehäuses 2 ist somit über den gesamten Strömungsquerschnitt des Reaktorgehäuses 2 etwa konstant. Da die dreidimensionale Strömung der umgelenkten Rauchgase auch in der durch die Sprühdüsen 3 symbolisierten Waschzone des Reaktors aufrechterhalten wird, ergibt sich auf diese Weise eine über den gesamten Strömungsquerschnitt des Reaktorgehäuses 2 konstante Abscheideleistung. Diese ist insgesamt erheblich höher als die Abscheideleistung bekannter Reaktoren von Rauchgas-Entschwefelungs-Anlagen, weil sich bei diesen im Bereich der Innenkante 5 (siehe Fig. 1) eine Strömungsablösung ergibt, die zusammen mit dem erheblich kürzeren Strömungsweg der aus dem oberen Teil des Rauchgaskanales 1 kommenden Rauchgase zu einer Zone mit erheblich geringerer Vorabscheidung führt. Die sich hierdurch ausbildenden Rauchgassträhnen unterschiedlicher Schadstoffbelastung können bei der Durchströmung des Reaktorgehäuses 2 auch beim Vorhandensein mehrerer Waschzonen nicht vergleichmäßigt werden.

Da bei der mit der Wirbeleinbaufläche 4 versehenen Vorrichtung durch die Ausbildung einer stark dreidimensionalen Strömung bereits im unteren Teil des Reaktorgehäuses 2 eine gleichmäße Abscheideleistung im Reaktor erzielt wird, kann die Menge der dem Reaktor zugeführten Kalkemulsion reduziert werden. Hierdurch verringern sich die Betriebskosten der Rauchgas-Entschwefelungs-Anlage, insbesondere da die Pumpenleistung für das Hochpumpen der Kalkemulsion zu den Sprühdüsen 3 verringert wird. Außerdem ist es möglich, die Höhe des Reaktorgehäuses 2 zu reduzieren, weil die vergleichmäßigte Rauchgasströmung durch eine über den gesamten Strömungsquerschnitt gleiche Vorabscheidung von Schwefeldioxid es ermöglicht, daß die Anzahl der Waschzonen und damit das Bauvolumen des Reaktorgehäuses 2 reduziert wird. Im Ergebnis verringern sich somit auch die Erstellungskosten für die Rauchgas-Entschwefelungs-Anlage.

Diese gegenüber dem bekannten Stand der Technik erhebliche Erhöhung der Abscheideleistung von Rauchgas-Entschwefelungs-Anlagen wird mit einfachsten technischen Mitteln erzielt. Bei den Wirbeleinbauflächen 4 handelt es sich um einfache Bauteile, die normalerweise fest im Rauchgaskanal 1 installiert werden können. Nur wenn sich das Volumen des zu entschwefelnden Rauchgases sehr stark ändert, kann es vorteilhaft sein, die Wirbeleinbaufläche 4 durch einen Stellantrieb verstellbar auszuführen. Um bei Inbetriebnahme der Rauchgas-Entschwefelungs-Anlage eine optimale Einstellung der Wirbeleinbaufläche 4 zu ermöglichen, ist es weiterhin vorteilhaft, die Wirbeleinbaufläche 4 einstellbar auszuführen.

### Bezugszeichenliste:

- 1: Rauchgaskanal
- 2: Reaktorgehäuse
- 3: Sprühdüse
- 4: Wirbeleinbaufläche
- 5: Innenkante
- F1: Strömungsfaden
- F2: Strömungsfaden
- F3: Strömungsfaden
- F4: Strömungsfaden

## Patentansprüche

1. Verfahren zur Erhöhung der Abscheideleistung von Rauchgas-Entschwefelungs-Anlagen mit mindestens einem Reaktor (2), dem das Rauchgas über mindestens einen Rauchgaskanal (1) im unteren Bereich etwa waagerecht zugeführt und der nach einer Umlenkung des Rauchgases in die senkrechte Richtung vom Rauchgas von unten nach oben durchströmt wird,
**dadurch gekennzeichnet**,
daß durch mindestens eine im Endbereich des Rauchgaskanals (1) mit ihrer Haupterstreckung unter einem spitzen Winkel zur Strömungsrichtung des Rauchgases angeordnete, mindestens ein Vorderkantenwirbelsystem erzeugende Wirbeleinbaufläche (4) die waagerechte zweidimensionale Strömung des Rauchgases im Rauchgaskanal (1) durch Ausbildung eines die Strömungsfäden (F1 - F4) der Strömung im Rauchgaskanal (1) zopfartig miteinander verflechtenden stationären Wirbelnachlaufes vor dem Eintritt in die Waschzone des Reaktors (2) in eine stark dreidimensionale, in die senkrechte Richtung umgelenkte Strömung umgewandelt wird.

2. Verfahren nach Anspruch 1, dadurch gekennzeichnet, daß die dreidimensionale Strömung in der Waschzone des Reaktors (2) aufrechterhalten wird.

3. Vorrichtung zur Erhöhung der Abscheideleistung von Rauchgas-Entschwefelungs-Anlagen mit mindestens einem Reaktor (2), dem das Rauchgas über mindestens einen Rauchgaskanal (1) im unteren Bereich etwa waagerecht zugeführt und der nach einer Umlenkung des Rauchgases in die senkrechte Richtung vom Rauchgas von unten nach oben durchströmt wird, dadurch gekennzeichnet, daß im Endbereich des Rauchgaskanals (1) mindestens eine Wirbeleinbaufläche (4) mit ihrer Haupterstreckung unter einem spitzen Winkel zur Strömungsrichtung des Rauchgases angeordnet ist.

4. Vorrichtung nach Anspruch 3, dadurch gekennzeichnet, daß die Wirbeieinbaufläche (4) einstellbar ist.

5. Vorrichtung nach Anspruch 3 oder 4, dadurch gekennzeichnet, daß die Wirbeleinbaufläche (4) durch einen Stellantrieb verstellbar ist.

## Claims

1. Method for improving the separating performance of flue-gas desulphurization installations with at least one reactor (2), to which the flue gas is fed approximately horizontally in the lower region via at least one flue-gas duct (1) and through which the flue gas flows from the bottom upwards following a deflection of the flue gas into the vertical direction, characterized in that the horizontal two-dimensional flow of the flue gas in the flue-gas duct (1) is converted, before entry to the scrubbing zone of the reactor (2), into a markedly three-dimensional flow, deflected in the vertical direction, by the formation of a steady-state vortex wake that entwines the stream filaments (F1-F4) of the flow in the flue-gas duct (1) with one another in the manner of a plait by means of at least one installed vortex surface (4) which is arranged in the end region of the flue-gas duct (1) with its principal axis at an acute angle to the direction of flow of the flue gas and generates at least a leading-edge vortex system.

2. Method according to Claim 1, characterized in that the three-dimensional flow is maintained in the scrubbing zone of the reactor (2).

3. Apparatus for improving the separating performance of flue-gas desulphurization installations with at least one reactor (2), to which the flue gas is fed approximately horizontally in the lower region via at least one flue-gas duct (1) and through which the flue gas flows from the bottom upwards following a deflection of the flue gas into the vertical direction, characterized in that at least one installed vortex surface (4) is arranged in the end region of the flue-gas duct (1) with its principal axis at an acute angle to the direction of flow of the flue-gas.

4. Apparatus according to Claim 3, characterized in that the installed vortex surface (4) is adjustable.

5. Apparatus according to Claim 3 or 4, characterized in that the installed vortex surface (4) can be adjusted by means of an actuating drive.

## Revendications

1. Procédé d'augmentation du rendement de séparation d'installations de désulfuration de gaz d'échappement, comprenant au moins un réacteur (2) auquel les gaz d'échappement sont transmis sensiblement horizontalement dans la zone inférieure par l'intermédiaire d'au moins un conduit de gaz d'échappement (1) et qui, après déviation des gaz d'échappement dans la direction verticale, est parcouru de bas en haut par les gaz d'échappement, caractérisé en ce qu'au moins un plan de tourbillonnement rapporté (4), qui est disposé dans la zone extrême du conduit de gaz d'échappement (1) en formant avec sa plus grande dimension un angle aigu par rapport à la direction d'écoulement des gaz d'échappement et qui crée au moins un système tourbillonnaire de bord avant, permet de transformer l'écoulement bidimensionnel horizontal des gaz d'échappement circulant dans le conduit de gaz d'échappement (1) en un écoulement fortement tridimensionnel dévié dans la direction verticale, en formant avant l'entrée dans la zone de lavage du réacteur (2) un sillage tourbillonnaire stationnaire qui entrelace les fils d'écoulement (F1 à F4) dans le conduit de gaz d'échappement (1) à la manière d'une tresse.

2. Procédé selon la revendication 1, caractérisé en ce que l'écoulement tridimensionnel est conservé dans la zone de lavage du réacteur (2).

3. Dispositif d'augmentation du rendement de séparation d'installations de désulfuration de gaz d'échappement, comprenant au moins un réacteur (2) auquel les gaz d'échappement sont transmis sensiblement horizontalement dans la zone inférieure par l'intermédiaire d'au moins un conduit de gaz d'échappement (1) et qui, après déviation des gaz d'échappement dans la direction verticale, est parcouru de bas en haut par les gaz d'échappement, caractérisé en ce qu'au moins un plan de tourbillonnement rapporté (4), dont la plus grande dimension forme un angle aigu avec la direction d'écoulement des gaz d'échappement, est disposé dans la zone extrême du conduit de gaz d'échappement (1).

4. Dispositif selon la revendication 3, caractérisé en ce que le plan de tourbillonnement rapporté (4) est réglable.

5. Dispositif selon la revendication 3 ou 4, caractérisé en ce que le plan de tourbillonnement rapporté (4) peut être déplacé à l'aide d'un organe de positionnement.
